# EUROPEAN PATENT APPLICATION

(11) **EP 4 815 519 A1**
(43) Date of publication of application: **30.09.2026**
(21) Application number: 24906053.4
(22) Date of filing: 29.11.2024
(51) Int. Cl.: H04W 4/50, H04L 41/14

(54) **COMMUNICATION METHOD AND APPARATUS**

(30) Priority: 20.12.2023 CN 202311765756
(71) Applicant: Huawei Technologies Co., Ltd., Shenzhen, Guangdong 518129 (CN)
(72) Inventor: ZHAO, Xian, Shenzhen, Guangdong 518129 (CN); XU, Ruiyue, Shenzhen, Guangdong 518129 (CN)
(74) Representative: Isarpatent
(86) International application number: PCT/CN2024/135894
(87) International publication number: WO 2025/130568

(57) **Abstract**

This application discloses a communication method and apparatus, relating to the communication field, to meet service requirements of network digital twin service consumers. The communication method includes: A second node serving as a management service provider receives, from a first node serving as a management service consumer, requirement information for a network digital twin service; creates a network digital twin instance based on the requirement information; receives, from the first node, first request information for requesting the network digital twin service; and sends, to the first node, an execution result of the network digital twin service executed on the network digital twin instance.

## Description

This application claims priority to Chinese Patent Application No. 202311765756.0, filed with the China National Intellectual Property Administration on December 20, 2023 and entitled "COMMUNICATION METHOD AND APPARATUS", which is incorporated herein by reference in its entirety.

### TECHNICAL FIELD

This application relates to the communication field, and in particular, to a communication method and apparatus.

### BACKGROUND

As deployment scales of 5th generation (5th generation, 5G) and even 6th generation (6th generation, 6G) mobile communication systems gradually increase, and application of the next-generation Internet (Internet protocol version 6, IPv6) deepens, development of next-generation network technologies has attracted industry attention. Network intelligence is considered as a trend in next-generation network development. The network provides the foundation for information transmission in a digital society, and digitalization of the network is a prerequisite for development of intelligence. In this context, digital twin technology has emerged. With the development of digital twin technology and its application across a plurality of industries such as production and manufacturing, the application of digital twin technology concept has gradually attracted research and attention in the field of communication networks. In the application of digital twin technology to communication networks, a network digital twin (network digital twin, NDT) constructs a real-time mirror of a physical network to enhance systematic simulation, optimization, verification, and control capabilities that the physical network lacks. This facilitates deployment of new network technologies and enables more efficient handling of network problems and challenges.

With the successful initiation of the SA5 R19 network digital twin under the service and system aspects (service & system aspects, SA) working group 5 (SA5) of the 3rd generation partnership project (3rd Generation Partnership Project, 3GPP), network digital twin is set to become one of the hot topics discussed in the R19 standardization process. The SA5 group is mainly responsible for standardization related to management and orchestration (management, orchestration and charging) in the SA.

A network digital twin management service is a typical application scenario of network digital twins in communication networks. Currently, the network digital twin management service cannot meet service requirements of network digital twin service consumers.

### SUMMARY

This application provides a communication method and apparatus to meet service requirements of network digital twin service consumers.

To achieve the foregoing objective, this application uses the following technical solutions.

According to a first aspect, a communication method is provided, and is applied to a second node serving as a management service provider. The method may be performed by the second node, may be performed by a component or an apparatus (for example, a processor, a chip, a chip system, or the like) used in the second node, or may be performed by a logical module or software that can implement all or a part of functions of the second node. The communication method includes: receiving, from a first node, requirement information for a network digital twin service; creating a network digital twin instance based on the requirement information; receiving, from the first node, first request information for requesting the network digital twin service; and sending, to the first node, an execution result of the network digital twin service executed on the network digital twin instance.

In the first aspect, the first node serving as a management service consumer first sends the requirement information for the network digital twin service to the second node serving as a management service provider, so that the second node can create a corresponding network digital twin instance based on the requirement information in a customized manner, and implement the network digital twin service of the first node based on the network digital twin instance. This can meet a requirement of the management service consumer for a granularity of a network digital twin model. Moreover, the created network digital twin instance matches the requirement of the management service consumer. In this way, a waste of network digital twin resources is avoided.

With reference to the first aspect, in a possible implementation, the requirement information includes first identification information indicating the requirement information, and at least one of: a required network digital twin service, a validity period of the network digital twin service, a source of data required for creating the network digital twin instance, or a frequency of synchronization between the network digital twin instance and network data.

In this implementation, several types of possible content included in the requirement information is designed, so that the second node can create the corresponding network digital twin instance in the customized manner based on the requirement information.

With reference to the first aspect, in a possible implementation, the method may further include: sending first indication information indicating that a requirement for the network digital twin service can be met.

In this implementation, the second node notifies, by using the first indication information, the first node that a capability of the second node can meet the requirement information of the first node, so that the first node can determine whether to send the first request information for requesting the network digital twin service.

With reference to the first aspect, in a possible implementation, the method may further include: before receiving the first request information, receiving second request information for requesting creation of the network digital twin instance.

In this implementation, the second request information is received to determine that creation of the network digital twin instance can be started.

With reference to the first aspect, in a possible implementation, the second request information includes the first identification information indicating the requirement information, or the second request information includes the first identification information and status information of the network digital twin instance. The method may further include: creating the network digital twin instance based on the requirement information.

In this implementation, it can be determined, based on the second request information, which requirement information should be used for creating the network digital twin instance, and the network digital twin instance is created.

With reference to the first aspect, in a possible implementation, the second request information includes the first identification information indicating the requirement information, and requirement information for a first service in the network digital twin service, or the second request information includes the first identification information, requirement information for a first service, and status information of the network digital twin instance; and the requirement information for the first service is unavailable for a service other than the first service, and the network digital twin instance includes a first instance and a second instance. The method may further include: creating the first instance based on the requirement information for the network digital twin service, where the first instance is used for a service other than the first service; and updating the first instance based on the requirement information for the first service, to obtain the second instance, where the second instance is used for the first service.

In this implementation, it can be determined, based on the second request information, which requirement information should be used for creating the network digital twin instance. Full requirement information of the first node is classified into two types: a common dataset (for example, the requirement information for the network digital twin service) and a dedicated dataset (for example, the requirement information for the first service). Corresponding network digital twin instances are separately created, and corresponding network digital twin services are implemented based on the network digital twin instances. In this way, a granularity of the network digital twin service is improved.

With reference to the first aspect, in a possible implementation, the method may further include: sending second identification information indicating the network digital twin instance.

In this implementation, the second node sends the second identification information to the first node. In this way, when requesting the network digital twin service, the first node can use the second identification information to indicate to invoke which network digital twin instance.

With reference to the first aspect, in a possible implementation, the method may further include: modifying the status information of the network digital twin instance when a condition for triggering an instance status change is met; and sending the modified status information of the network digital twin instance.

In this implementation, a lifecycle management mechanism of the network digital twin instance is designed. The status information of the network digital twin instance is generated and changed to implement lifecycle management of the network digital twin instance.

With reference to the first aspect, in a possible implementation, the first request information includes a service parameter for requesting the network digital twin service, and at least one of: the second identification information indicating the network digital twin instance or the first identification information indicating the requirement information.

In this implementation, the first request information can indicate which network digital twin instance should be used, in combination with the service parameter, to implement the corresponding network digital twin service.

With reference to the first aspect, in a possible implementation, the network digital twin service includes a pre-verification service, a visualization service, or a pre-evaluation service; and an execution result of the pre-verification service is a network indicator value obtained after a to-be-verified policy is executed in the network digital twin instance, an execution result of the visualization service is visualization data of a visualization object, and an execution result of the pre-evaluation service is a predicted value of an evaluation indicator of the pre-evaluation service.

In this implementation, several possible network digital twin services and corresponding execution results of the network digital twin services are designed.

According to a second aspect, a communication method is provided, and is applied to a first node serving as a management service consumer. The method may be performed by the first node, may be performed by a component or an apparatus (for example, a processor, a chip, a chip system, or the like) used in the first node, or may be performed by a logical module or software that can implement all or a part of functions of the first node. The communication method includes: sending requirement information for a network digital twin service; sending first request information for requesting the network digital twin service; and receiving an execution result of the network digital twin service executed on a network digital twin instance.

In the second aspect, the first node serving as a management service consumer first sends the requirement information for the network digital twin service to a second node serving as a management service provider, so that the second node can create a corresponding network digital twin instance based on the requirement information in a customized manner, and implement the network digital twin service of the first node based on the network digital twin instance. This can meet a requirement of the management service consumer for a granularity of a network digital twin model. Moreover, the created network digital twin instance matches the requirement of the management service consumer. In this way, a waste of network digital twin resources is avoided.

With reference to the second aspect, in a possible implementation, the requirement information includes first identification information indicating the requirement information, and at least one of: a required network digital twin service, a validity period of the network digital twin service, a source of data required for creating the network digital twin instance, or a frequency of synchronization between the network digital twin instance and network data.

With reference to the second aspect, in a possible implementation, the method further includes:
receiving first indication information indicating that a requirement for the network digital twin service can be met.

With reference to the second aspect, in a possible implementation, the method further includes:
before sending the first request information, sending second request information for requesting creation of the network digital twin instance.

With reference to the second aspect, in a possible implementation, the second request information includes the first identification information indicating the requirement information, or the second request information includes the first identification information and status information of the network digital twin instance; or the second request information includes the first identification information indicating the requirement information, and requirement information for a first service in the network digital twin service, or the second request information includes the first identification information, requirement information for a first service, and status information of the network digital twin instance; and the requirement information for the first service is unavailable for a service other than the first service.

With reference to the second aspect, in a possible implementation, the method further includes:
receiving second identification information indicating the network digital twin instance.

With reference to the second aspect, in a possible implementation, the method further includes:
receiving modified status information of the network digital twin instance.

With reference to the second aspect, in a possible implementation, the first request information includes a service parameter for requesting the network digital twin service, and at least one of: the second identification information indicating the network digital twin instance or the first identification information indicating the requirement information.

With reference to the second aspect, in a possible implementation, the network digital twin service includes a pre-verification service, a visualization service, or a pre-evaluation service; and an execution result of the pre-verification service is a network indicator value obtained after a to-be-verified policy is executed in the network digital twin instance, an execution result of the visualization service is visualization data of a visualization object, and an execution result of the pre-evaluation service is a predicted value of an evaluation indicator of the pre-evaluation service.

According to a third aspect, this application provides a communication apparatus. The communication apparatus may be a second node, or a chip or a system on chip in a second node. The communication apparatus may implement functions performed by the second node according to the first aspect or the possible design of the first aspect. The functions may be implemented by hardware, or may be implemented by hardware executing corresponding software. The hardware or the software includes one or more modules corresponding to the functions. For example, the communication apparatus includes: a transceiver module, configured to receive requirement information for a network digital twin service; and a processing module, configured to create a network digital twin instance based on the requirement information. The transceiver module is further configured to receive first request information for requesting the network digital twin service. The transceiver module is further configured to send an execution result of the network digital twin service executed on the network digital twin instance.

With reference to the third aspect, in a possible implementation, the requirement information includes first identification information indicating the requirement information, and at least one of: a required network digital twin service, a validity period of the network digital twin service, a source of data required for creating the network digital twin instance, or a frequency of synchronization between the network digital twin instance and network data.

With reference to the third aspect, in a possible implementation, the transceiver module is further configured to send first indication information indicating that a requirement for the network digital twin service can be met.

With reference to the third aspect, in a possible implementation, the transceiver module is further configured to: before receiving the first request information, receive second request information for requesting creation of the network digital twin instance.

With reference to the third aspect, in a possible implementation, the second request information includes the first identification information indicating the requirement information, or the second request information includes the first identification information and status information of the network digital twin instance. The processing module is specifically configured to create the network digital twin instance based on the requirement information.

With reference to the third aspect, in a possible implementation, the second request information includes the first identification information indicating the requirement information, and requirement information for a first service in the network digital twin service, or the second request information includes the first identification information, requirement information for a first service, and status information of the network digital twin instance; and the requirement information for the first service is unavailable for a service other than the first service, and the network digital twin instance includes a first instance and a second instance. The processing module is specifically configured to: create the first instance based on the requirement information for the network digital twin service, where the first instance is used for a service other than the first service; and update the first instance based on the requirement information for the first service, to obtain the second instance, where the second instance is used for the first service.

With reference to the third aspect, in a possible implementation, the transceiver module is further configured to send second identification information indicating the network digital twin instance.

With reference to the third aspect, in a possible implementation, the processing module is further configured to modify the status information of the network digital twin instance when a condition for triggering an instance status change is met; and the transceiver module is further configured to send the modified status information of the network digital twin instance.

With reference to the third aspect, in a possible implementation, the first request information includes a service parameter for requesting the network digital twin service, and at least one of: the second identification information indicating the network digital twin instance or the first identification information indicating the requirement information.

With reference to the third aspect, in a possible implementation, the network digital twin service includes a pre-verification service, a visualization service, or a pre-evaluation service; and an execution result of the pre-verification service is a network indicator value obtained after a to-be-verified policy is executed in the network digital twin instance, an execution result of the visualization service is visualization data of a visualization object, and an execution result of the pre-evaluation service is a predicted value of an evaluation indicator of the pre-evaluation service.

According to a fourth aspect, this application provides a communication apparatus. The communication apparatus may be a first node, or a chip or a system on chip in a first node. The communication apparatus may implement functions performed by the first node according to the second aspect or the possible design of the second aspect. The functions may be implemented by hardware, or may be implemented by hardware executing corresponding software. The hardware or the software includes one or more modules corresponding to the functions. For example, the communication apparatus includes a transceiver module, configured to send requirement information for a network digital twin service. The transceiver module is further configured to send first request information for requesting the network digital twin service. The transceiver module is further configured to receive an execution result of the network digital twin service executed on a network digital twin instance.

With reference to the fourth aspect, in a possible implementation, the requirement information includes first identification information indicating the requirement information, and at least one of: a required network digital twin service, a validity period of the network digital twin service, a source of data required for creating the network digital twin instance, or a frequency of synchronization between the network digital twin instance and network data.

With reference to the fourth aspect, in a possible implementation, the transceiver module is further configured to receive first indication information indicating that a requirement for the network digital twin service can be met.

With reference to the fourth aspect, in a possible implementation, the transceiver module is further configured to: before sending the first request information, send second request information for requesting creation of the network digital twin instance.

With reference to the fourth aspect, in a possible implementation, the second request information includes the first identification information indicating the requirement information, or the second request information includes the first identification information and status information of the network digital twin instance; or the second request information includes the first identification information indicating the requirement information, and requirement information for a first service in the network digital twin service, or the second request information includes the first identification information, requirement information for a first service, and status information of the network digital twin instance; and the requirement information for the first service is unavailable for a service other than the first service.

With reference to the fourth aspect, in a possible implementation, the transceiver module is further configured to receive second identification information indicating the network digital twin instance.

With reference to the fourth aspect, in a possible implementation, the transceiver module is further configured to receive modified status information of the network digital twin instance.

With reference to the fourth aspect, in a possible implementation, the first request information includes a service parameter for requesting the network digital twin service, and at least one of: the second identification information indicating the network digital twin instance or the first identification information indicating the requirement information.

With reference to the fourth aspect, in a possible implementation, the network digital twin service includes a pre-verification service, a visualization service, or a pre-evaluation service; and an execution result of the pre-verification service is a network indicator value obtained after a to-be-verified policy is executed in the network digital twin instance, an execution result of the visualization service is visualization data of a visualization object, and an execution result of the pre-evaluation service is a predicted value of an evaluation indicator of the pre-evaluation service.

According to a fifth aspect, this application provides a communication apparatus. The communication apparatus includes a processor and a transceiver. The processor and the transceiver are configured to support the communication apparatus in performing the method according to the first aspect or the second aspect. Further, the communication apparatus may include a memory. The memory stores computer instructions, and the processor may run the computer instructions to perform the method according to the first aspect or the second aspect.

According to a sixth aspect, this application provides a computer-readable storage medium. The computer-readable storage medium stores computer instructions. When the computer instructions are run, the method according to the first aspect or the second aspect is performed.

According to a seventh aspect, this application provides a computer program product including instructions. When the computer program product runs on a computer, the computer is enabled to perform the method according to the first aspect or the second aspect.

According to an eighth aspect, this application provides a chip. The chip includes a controller and an interface circuit. The controller is configured to interact with another apparatus via the interface circuit, to perform the method according to the first aspect or the second aspect.

According to a ninth aspect, this application provides a communication system. The communication system includes a first apparatus and a second apparatus. The first apparatus is configured to perform the method according to the second aspect, and the second apparatus is configured to perform the method according to the first aspect.

According to a tenth aspect, this application provides a communication method, including: A first apparatus performs the method according to the second aspect, and a second apparatus performs the method according to the first aspect.

For beneficial effects described in the third aspect to the tenth aspect of this application, refer to analysis of beneficial effects in the first aspect or the second aspect. Details are not described herein again.

### BRIEF DESCRIPTION OF DRAWINGS

FIG. 1 is a schematic flowchart of a network digital twin management service according to an embodiment of this application;
FIG. 2 is a diagram of an architecture of a communication system according to an embodiment of this application;
FIG. 3 is a diagram of an architecture of another communication system according to an embodiment of this application;
FIG. 4 is a diagram of an architecture of another communication system according to an embodiment of this application;
FIG. 5 is a diagram of an architecture of another communication system according to an embodiment of this application;
FIG. 6 is a schematic flowchart of a communication method according to an embodiment of this application;
FIG. 7 is a schematic flowchart of another communication method according to an embodiment of this application;
FIG. 8 is a schematic flowchart of another communication method according to an embodiment of this application;
FIG. 9 is a schematic flowchart of another communication method according to an embodiment of this application;
FIG. 10 is a schematic flowchart of another communication method according to an embodiment of this application;
FIG. 11 is a schematic flowchart of another communication method according to an embodiment of this application;
FIG. 12 is a schematic flowchart of another communication method according to an embodiment of this application;
FIG. 13 is a schematic flowchart of another communication method according to an embodiment of this application;
FIG. 14 is a diagram of a structure of a communication apparatus according to an embodiment of this application;
FIG. 15 is a diagram of a structure of another communication apparatus according to an embodiment of this application; and
FIG. 16 is a diagram of a structure of another communication apparatus according to an embodiment of this application.

### DESCRIPTION OF EMBODIMENTS

The network architecture and the service scenario described in embodiments of this application are intended to describe the technical solutions in embodiments of this application more clearly, and do not constitute a limitation on the technical solutions provided in embodiments of this application. A person of ordinary skill in the art may learn that: With evolution of the network architecture and emergence of new service scenarios, the technical solutions provided in embodiments of this application are also applicable to similar technical problems.

The SA5 of the 3GPP has successfully initiated the study on R19 network digital twin. Specific research objectives are as follows:
1. Study and define terms related to digital twin (digital twin, DT) in a 3GPP management system, for example, network digital twin.
2. Study application scenarios and requirements of network digital twin, for example, network operation pre-verification, radio access network (radio access network, RAN) optimization, service assurance, and the like.
3. Study collaboration with other standards organizations on network digital twin management.

In this case, network digital twin will become one of hot topics discussed in the R19 standard. Network digital twin is a network management implementation. Therefore, lifecycle management of network digital twin should also be considered as a part of a network management capability, when it is studied how to use network digital twin to better implement a network management service. Especially when a network digital twin service (also referred to as network digital twin capability) is applicable to a plurality of use case scenarios, for example, using network digital twin to implement energy saving and using network digital twin to implement service level agreement (service level agreement, SLA) assurance, or the like, management of the network digital twin service may also be presented to a management service consumer (for example, an operator, a third party, or the like) as a management service.

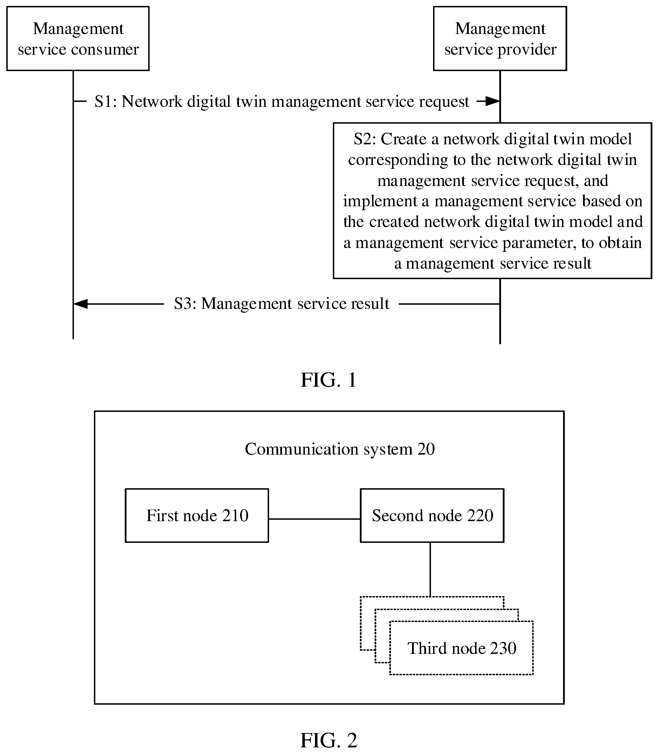

Technical studies on network digital twin are all centered on a management service that network digital twin can provide. For example, network digital twin is used to provide a visualization capability of an energy-saving high-definition digital map, and network digital twin is used to provide a pre-verification service or the like for an energy-saving policy. As shown in FIG. 1, a process of invoking a network digital twin management service includes the following steps.

S1: A network digital twin management service (management service, MNS) consumer (briefly referred to as management service consumer) sends a network digital twin management service request to a network digital twin management service provider (briefly referred to as management service provider). For example, the management service provider may also be referred to as an MNS producer, an MNS provider, or the like.

The network digital twin management service is a type of management service that uses a network mirror constructed based on network digital twin, to execute a corresponding simulation task, for example, a pre-verification service, a pre-evaluation service, a visualization service, or the like. In other words, the network digital twin management service request is used to invoke a network digital twin capability to implement a management service. The network digital twin management service request carries a management service parameter for implementation of the management service. The management service parameter is related to a type of the network digital twin management service. For example, a management service parameter of the pre-evaluation service includes an evaluation time, an evaluation manner, region information, an assurance requirement, and the like. For another example, a management service parameter of the pre-verification service includes a to-be-verified policy, a verification evaluation indicator, an application scope of the to-be-verified policy, and the like. The following describes the pre-verification service, the pre-evaluation service, or the visualization service with reference to examples.

The pre-verification service may be a service used to verify availability of a policy. Specifically, the management service consumer may obtain one or more policies based on an analysis service, historical experience, or the like. However, the management service consumer does not learn the impact that the policy has on a network if the policy is actually executed. In this case, the management service consumer may request the pre-verification service in the NDT management service from the MNS provider, to determine the impact that the policy has on the network if the policy is actually executed.

The management service provider uses the pre-verification service to execute the policy in a network simulated by a network digital twin instance, to obtain an execution result of the policy, and feeds back the execution result to the management service consumer. The execution result may represent impact that the policy has on the network if the policy is actually executed. In other words, the execution result may represent an indicator value of the network obtained after the policy is executed. The management service consumer may determine, based on the execution result and an original indicator value of an actual network, whether to configure the verified policy for the actual network. When there are a plurality of policies, the management service consumer may further select a better policy based on execution results corresponding to the plurality of policies, to configure the policy for the network.

For example, the pre-verification service can be used to verify availability of a policy for implementing energy saving. In this case, an execution result of the pre-verification service may be some indicators of a network element, a slice, or a network. A base station is used as an example. In the execution result of the pre-verification service, an indicator of the base station may be an energy efficiency indicator, a quantity of user equipment (user equipment, UE) accesses, a coverage area, or the like.

For another example, the pre-verification service may alternatively be used to verify availability of a policy for implementing fault handling, or used to verify availability or the like of a policy for implementing alarm processing. This is not limited.

The pre-evaluation service may be a service used to evaluate a performance indicator of an evaluation object (for example, a network element, an entire network, or a slice) in a future time period. Specifically, the management service consumer may need to obtain a performance indicator of a network element, an entire network, or a slice in a future time period. In this case, the management service consumer may request a pre-evaluation service of network digital twin to predict the corresponding performance indicator.

For example, the pre-evaluation service can be used to evaluate a latency, a throughput, bandwidth, or the like of the evaluation object in a future time period.

The visualization service may be a service used to visualize some indicators of a network. The management service consumer may have a requirement for visualization of network information. An energy-saving high-definition digital map in the form of a visualized network is used as an example. Network information having a visualization requirement is network information related to energy saving, for example, an energy efficiency indicator, an energy consumption indicator, an energy-saving status of a network element, or the like. Corresponding indicators are generated by a network simulated by the network digital twin instance, and a user-friendly interface (for example, in the form of a high-definition digital map) is generated based on interface design to display these indicators.

It should be noted that the management service parameter may also be referred to as a service parameter. This is not limited.

S2: After receiving the network digital twin management service request, the management service provider creates a corresponding network digital twin model, and implements the management service based on the created network digital twin model and the management service parameter, to obtain a management service result.

For example, if the network digital twin management service requested by the network digital twin management service request is a pre-verification service, the management service result may be a pre-verification result. For another example, if the network digital twin management service requested by the network digital twin management service request is a pre-evaluation service, the management service result may be a value of a pre-evaluation key performance indicator (key performance indicator, KPI) or the like.

It should be noted that, regardless of the service requested by the network digital twin management service request, a validity period of a network digital twin service of the network digital twin model created in step S2, a source of data required for creating the network digital twin model, and a frequency of synchronizing with live network data are all fixed, but are not designed for different network digital twin management services in a customized manner.

S3: The management service provider feeds back the management service result to the management service consumer, to complete invoking of the network digital twin management service.

In the process of invoking the network digital twin management service shown in step S1 to step S3, the management service provider creates the same network digital twin model regardless of the requirement of the management service consumer. Consequently, for the management service consumer, during implementation of the network digital twin management service, the created universal network digital twin model may not meet a requirement of the management service consumer for a granularity of the network digital twin model.

However, for the management service provider, during implementation of the network digital twin management service, because the created network digital twin model is universal rather than customized, it may cause the created network digital twin model to far exceed the requirement of the management service consumer. This causes a waste of network digital twin resources.

To resolve the foregoing technical problem, an embodiment of this application provides a communication method. In the communication method, a first node serving as a management service consumer first sends requirement information for a network digital twin service to a second node serving as a management service provider, so that the second node can create a corresponding network digital twin instance based on the requirement information in a customized manner, and implement the network digital twin service of the first node based on the network digital twin instance. This can meet a requirement of the management service consumer for a granularity of a network digital twin model. Moreover, the created network digital twin instance matches the requirement of the management service consumer. In this way, a waste of network digital twin resources is avoided. With reference to the accompanying drawings in this specification, the following describes a communication method and a communication system that are provided in embodiments of this application.

The communication method provided in embodiments of this application may be applied to various communication systems, for example, a 6th generation (6th generation, 6G) mobile communication system, a long term evolution (long term evolution, LTE) system, a 5th generation (5th generation, 5G) mobile communication system, a wireless fidelity (wireless fidelity, Wi-Fi) system, a future communication system, a system integrating a plurality of communication systems, or the like. This is not limited in embodiments of this application. 5G may also be referred to as new radio (new radio, NR).

The network architecture and the service scenario described in embodiments of this application are intended to describe the technical solutions in embodiments of this application more clearly, and do not constitute a limitation on the technical solutions provided in embodiments of this application. A person of ordinary skill in the art may learn that: With evolution of the network architecture and emergence of new service scenarios, the technical solutions provided in embodiments of this application are also applicable to similar technical problems.

FIG. 2 is a diagram of an architecture of a communication system 20 according to an embodiment of this application. As shown in FIG. 2, the communication system 20 includes a first node 210 and a second node 220. Optionally, as shown in FIG. 2, the communication system further includes at least one third node 230.

The first node 210 is configured to send requirement information for a network digital twin service to the second node 220.

The second node 220 is configured to: receive the requirement information for the network digital twin service, and create a network digital twin instance based on the requirement information.

The first node 210 is further configured to send first request information for requesting the network digital twin service.

The second node 220 is further configured to: receive the first request information, and invoke the created network digital twin instance to execute the network digital twin service, to obtain an execution result. Then, the second node 220 sends the execution result of the network digital twin service executed on the network digital twin instance to the first node 210.

Optionally, in this embodiment of this application, the first node may be, for example, a management service consumer, the second node may be, for example, a management service provider, and the third node may be, for example, a network data providing device. The following provides several possible application architectures with reference to different scenarios.

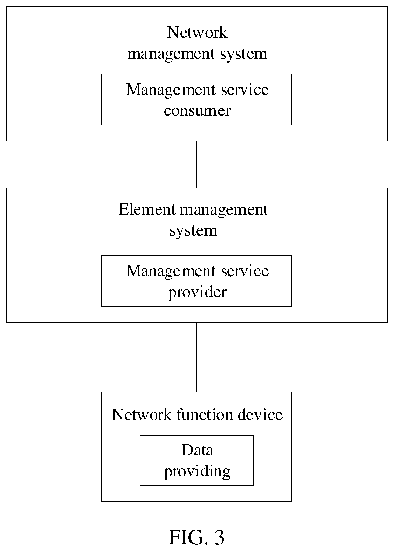

FIG. 3 is a diagram of a communication architecture according to an embodiment of this application. As shown in FIG. 3, the communication architecture includes a network management system (network management system, NMS), an element management system (element management system, EMS), and a network function (network function, NF) device.

The network management system is responsible for network operation, management, and maintenance functions, and may also be referred to as a cross-domain management system.

The element management system is configured to manage one or more network elements of a specific type, and may also be referred to as a domain management system or a single-domain management system.

The network function device is configured to provide network data. The network function device may be a network element in a radio access network (radio access network, RAN), for example, a next-generation base station (next-generation NodeB, gNB), a central unit (central unit, CU), a distributed unit (distributed unit, DU), or the like. Alternatively, the network function device may be a core network (core network, CN) network element, for example, an access and mobility management function (access and mobility management function, AMF), a session management function (session management function, SMF), a network exposure function (network exposure function, NEF), or the like.

The network management system serves as a management service consumer. The element management system serving as a management service provider provides a capability of constructing a network mirror (which may also be referred to as a network digital twin instance), supports execution of various simulation tasks in the network mirror, and feeds back an execution result to the network management system.

Optionally, the element management system may further configure, for the network function device, a policy obtained by executing a simulation task in the network digital twin instance.

The network function device serving as a live network element provides network data to the element management system when the element management system constructs the network mirror.

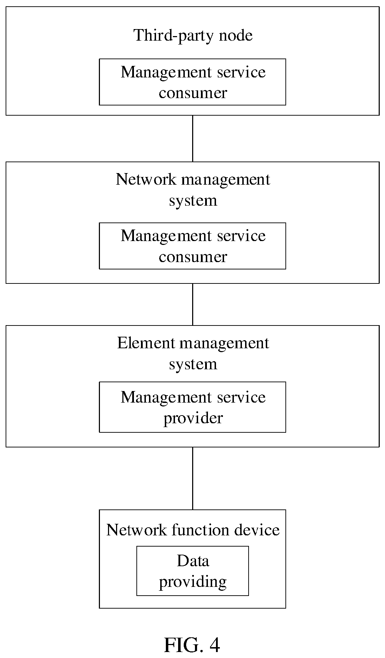

FIG. 4 is a diagram of a communication architecture according to an embodiment of this application. As shown in FIG. 4, the communication architecture includes a third-party node, a network management system, an element management system, and a network function device.

The third-party node is a device other than devices of an operator and a device vendor.

The network management system is usually a device of the operator, is responsible for network operation, management, and maintenance functions, and may also be referred to as a cross-domain management system.

The element management system is usually a device of the device vendor, is configured to manage one or more network elements of a specific type, and may also be referred to as a domain management system or a single-domain management system.

The network function device may be a device of the operator or a device of the device vendor, and is configured to provide a plurality of network functions. For a description of the network function device, refer to the description of the network function device in the communication architecture shown in FIG. 3. Details are not described herein again.

The third-party node serving as a management service consumer sends requirement information for a network digital twin service to the network management system. If the network management system cannot provide a network twin management service, the element management system serving as a management service provider provides the network twin management service. In this case, the network management system may also be classified as a management service consumer. The network function device provides network data to the element management system when the element management system constructs a network mirror.

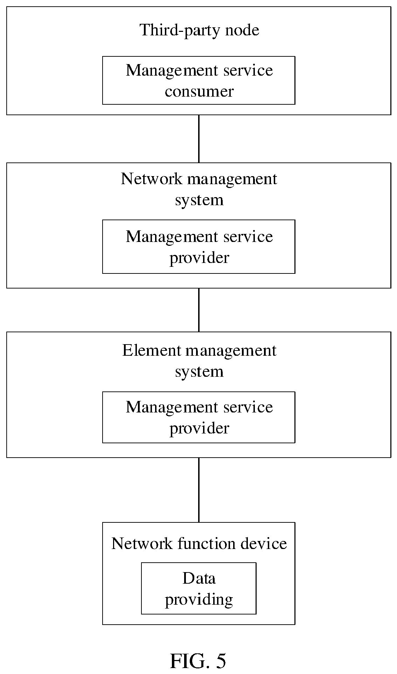

Alternatively, as shown in FIG. 5, the third-party node serves as a management service consumer, and the network management system and the element management system may provide a network twin management service together. In this case, the network management system and the element management system together serving as a management service provider provide the network twin management service. The network function device serving as a live network element provides network data to the network management system and/or the element management system when the network management system and/or the element management system construct/constructs a network mirror.

It should be understood that network elements playing roles of the management service consumer and the management service provider in the foregoing examples are used as examples for description. During actual implementation, based on a difference in network architectures, the network elements playing the foregoing roles may alternatively be designed in another manner. This is not limited.

Based on the communication architectures described in the foregoing examples in FIG. 2 to FIG. 5, an embodiment of this application provides a communication method. In the communication method provided in this embodiment of this application, a first node serving as a management service consumer first sends requirement information for a network digital twin service to a second node serving as a management service provider, so that the second node can create a corresponding network digital twin instance based on the requirement information in a customized manner, and implement the network digital twin service of the first node based on the network digital twin instance. This can meet a requirement of the management service consumer for a granularity of a network digital twin model. Moreover, the created network digital twin instance matches the requirement of the management service consumer. In this way, a waste of network digital twin resources is avoided.

The following describes the communication method provided in embodiments of this application with reference to the communication systems shown in FIG. 2 to FIG. 5.

It should be noted that, in the following embodiments of this application, names of messages between network elements, names of parameters, names of pieces of information, or the like are merely examples, and there may be other names in another embodiment. This is not specifically limited in the communication method provided in this application.

It may be understood that, in embodiments of this application, each network element may perform a part or all of the steps in embodiments of this application. These steps or operations are merely examples. In embodiments of this application, other operations or variations of various operations may be further performed. In addition, the steps may be performed in a sequence different from a sequence presented in embodiments of this application, and it is possible that not all operations in embodiments of this application need to be performed.

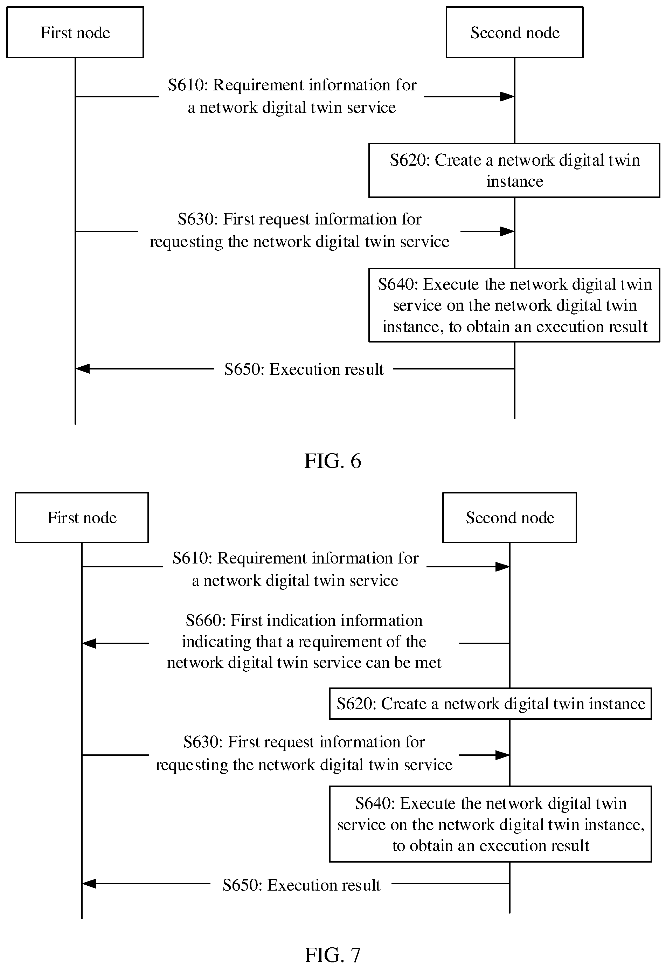

FIG. 6 shows an example of a communication method according to an embodiment of this application. The method is described by using interaction between a first node and a second node as an example. Certainly, an action of the first node in the method may alternatively be performed by an apparatus/a module in the first node, for example, a chip, a processor, a processing unit, or the like in the first node. An action of the second node in the method may alternatively be performed by an apparatus/a module in the second node, for example, a chip, a processor, a processing unit, or the like in the second node. This is not specifically limited in embodiments of this application. In embodiments of this application, processing performed by a single execution body (for example, the first node or the second node) may alternatively be divided into processing performed by a plurality of execution bodies, and these execution bodies may be logically and/or physically separated. For example, as shown in FIG. 6, the method may include the following steps.

S610: The first node sends requirement information for a network digital twin service to the second node, and correspondingly, the second node receives the requirement information for the network digital twin service from the first node.

The requirement information for the network digital twin service indicates a parameter for creating a network digital twin instance. With different requirements of the first node, the requirement information for the network digital twin service may also be different. For example, the requirement information for the network digital twin service may include first identification information indicating the requirement information, and at least one of: a required network digital twin service, a validity period of the network digital twin service, a source of data required for creating the network digital twin instance, or a frequency of synchronization between the network digital twin instance and network data (briefly referred to as refresh frequency).

Based on a correspondence between the first node and the requirement information for the network digital twin service, the first identification information may further indicate the first node. The network digital twin service required by the first node may be one or more capabilities. For example, the required network digital twin service may be at least one of: a visualization capability (which may also be referred to as a visualization service), a pre-verification capability (which may also be referred to as a pre-verification service), or a pre-evaluation capability (which may also be referred to as a pre-evaluation service). The validity period of the network digital twin service is an available duration of the network digital twin service required by the first node. The source of data required for creating the network digital twin instance may also be referred to as physical object information of network digital twin, a network scope of the data required for creating the network digital twin instance, or the like. The physical object information of network digital twin may include a granularity of a physical object of network digital twin and/or a geographical area to which the physical object belongs. The granularity of the physical object of network digital twin may be at a slice level, a subnet level, a network element level, or the like. The geographic area of the physical object of network digital twin is a geographic area of a network (for example, a slice, a subnet, a network element, or the like) from which the data for creating the network digital twin instance needs to be obtained.

S620: The second node creates the network digital twin instance.

After receiving the requirement information, the second node may determine whether a capability of the second node can meet the requirement information.

In an embodiment, if the second node determines that the capability of the second node can meet the requirement information, the second node may start to create the network digital twin instance.

In another embodiment, an occasion of starting to create the network digital twin instance may alternatively be determined based on an indication of the first node. In other words, after the second node determines that the capability of the second node can meet the requirement information, and receives, from the first node, information indicating to start creation, the second node starts to create the network digital twin instance.

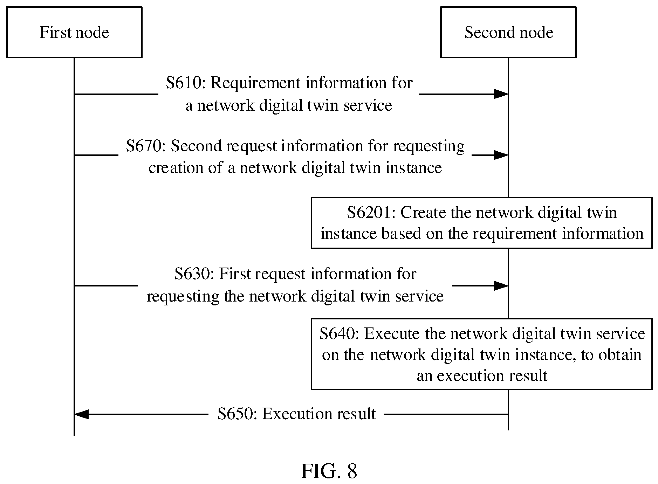

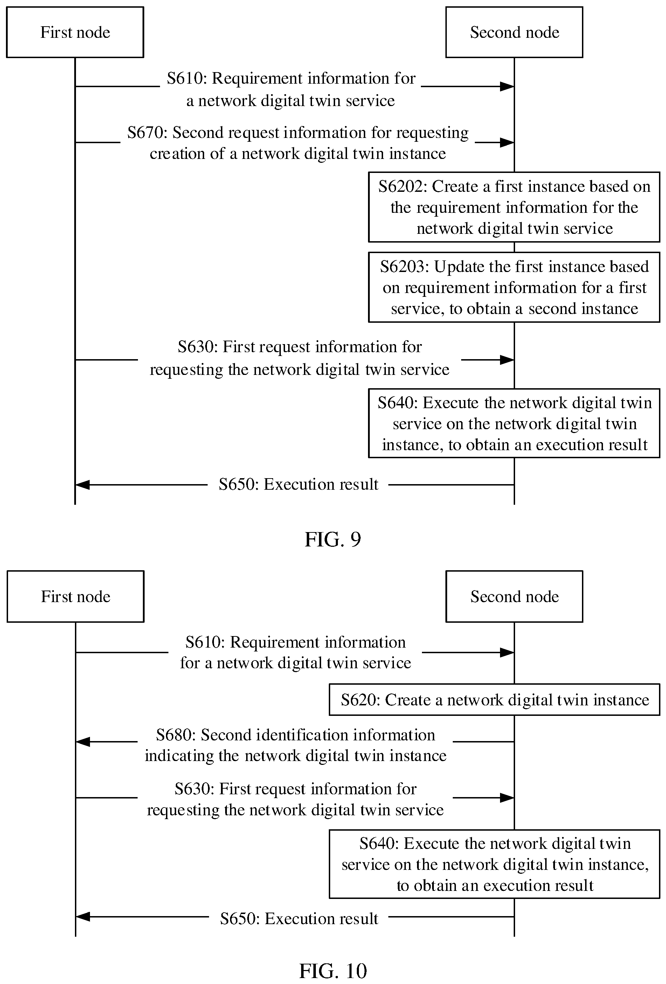

During creation of the network digital twin instance, data of a network function in a live network may be collected based on the requirement information to create the network digital twin instance. For specific implementation, refer to the following description of the embodiment shown in FIG. 8. Alternatively, data of a network function in a live network may be collected based on the requirement information and second request information that is sent by the first node, to create the network digital twin instance. For specific implementation, refer to the description of the embodiment shown in FIG. 9. During creation of the network digital twin instance, the data of the network function may be collected based on the granularity of the physical object of network digital twin and the refresh frequency of network digital twin in the requirement information. During implementation, the granularity of the physical object of network digital twin indicates from which network functions data needs to be collected, and the refresh frequency of network digital twin indicates frequency of collecting the data of the network functions.

Considering that the first node may have various requirements for the network digital twin service in different periods, network digital twin instances created by the second node in the different periods may also be different correspondingly. During creation of the network digital twin instance, corresponding identification information indicating network digital twin instances may be generated, to distinguish different network digital twin instances. After generating the identification information indicating the network digital twin instances, the second node may further send the identification information to the first node. In this way, when requesting the network digital twin service, the first node uses the identification information indicating the network digital twin instances to indicate which network digital twin instance is to be invoked. Specific implementation of sending, by the second node to the first node, the identification information indicating the network digital twin instances is described in the embodiment shown in FIG. 10.

Optionally, during creation of the network digital twin instance, status information of the network digital twin instance may be further generated, and lifecycle management of the network digital twin instance is implemented by changing the status information of the network digital twin instance. For example, the status information may be classified into: a creation state, where the network digital twin instance is in a creation process but has not been created, and cannot be used to implement the network digital twin service in this case; an activated state, where the network digital twin instance has been created, and can be used to implement the network digital twin service in this case; a running state, where the network digital twin instance has been created, and is implementing the network digital twin service in this case; a suspended running state, where the network digital twin instance is used to implement the network digital twin service, but a process of implementing the network digital twin service is suspended in this case; a deactivated state, where the network digital twin instance has been created, but the network digital twin instance may need to be modified or the like, and the network digital twin instance cannot be used to implement the network digital twin service in this case; and a disabled state, where the network digital twin instance has been created, but the network digital twin instance may need to be deleted or the like, and the network digital twin instance is no longer used for the network digital twin service in this case. Based on the foregoing definition, during creation of the network digital twin instance, the status information of the network digital twin instance is the creation state.

Optionally, if the second node determines that the capability of the second node can meet the requirement information, the second node may further send, to the first node, a type of information indicating that a requirement for the network digital twin service can be met, so that the first node can determine whether the requirement for the network digital twin service of the first node can be met. Specific implementation is described in the embodiment shown in FIG. 7.

In an embodiment, the second node may alternatively determine that the capability of the second node cannot meet the requirement information. In this case, the second node may send, to the first node, notification information notifying that the second node cannot meet the requirement information, so that the first node can timely determine that the second node cannot meet the requirement information.

Optionally, the notification information notifying that the second node cannot meet the requirement information may further carry a reason that the second node cannot meet the requirement information.

S630: The first node sends, to the second node, first request information for requesting the network digital twin service, and correspondingly, the second node receives, from the first node, the first request information for requesting the network digital twin service.

The first request information includes a service parameter for requesting the network digital twin service, and at least one of: second identification information indicating the network digital twin instance or the first identification information indicating the requirement information. The service parameter for the network digital twin service is a related parameter for implementation of a network digital twin management service. For example, if the network digital twin service is a pre-verification service, a corresponding service parameter may be a to-be-verified policy, a verification evaluation indicator, a verification policy application scope, or the like. For another example, if the network digital twin service is a visualization service, a corresponding service parameter may be a visualization granularity requirement, a visualization object scope, visualization information, or the like. The visualization information may be flexibly configured. For example, the visualization information may include at least one of: energy efficiency, a system capacity, a quantity of UE accesses, or the like. The first identification information can indicate the requirement information. The second node may determine, based on the first identification information, which network digital twin instances are generated based on the corresponding requirement information of the first identification information, and invoke one or more network digital twin instances to implement the network digital twin service. Similarly, the second identification information can indicate a corresponding network digital twin instance. The second node may determine, based on the second identification information, a network digital twin instance that needs to be invoked. In other words, the second node may directly anchor, based on the second identification information, the network digital twin instance for implementation of the network digital twin service. In this way, efficiency is relatively high.

It should be understood that the corresponding service parameter may be flexibly designed based on an implementation requirement for the network digital twin service. This is not limited.

S640: The second node executes the network digital twin service on the network digital twin instance, to obtain an execution result.

After receiving the first request information, the second node executes the network digital twin service on the network digital twin instance corresponding to the first request information. There may be a plurality of types of network digital twin services, and corresponding execution results of the network digital twin services may also be different. For example, if the network digital twin service is a pre-verification service, an execution result of the pre-verification service may be a network indicator value or network indicator values obtained after one or more to-be-verified policies are executed in the network digital twin instance.

For another example, if the network digital twin service is a visualization service, an execution result of the visualization service may be feature information of one or more nodes, where the feature information can be used for visual display. For example, the execution result of the visualization service may be a display interface that carries the feature information of the one or more nodes and that is obtained based on a user-friendly interface design. A quantity of nodes depends on a visualization granularity requirement and a visualization object scope. For example, a higher visualization granularity requirement indicates a larger quantity of visible nodes. A base station is used as an example of the node. If a visualization granularity is relatively low, for example, 10 km x 10 km, visible base stations may be base stations at a city level (there may be 50 base stations). If a visualization granularity is relatively high, for example, 1 km x 1 km, visible base stations may be base stations at a region level (there may be 500 base stations).

For another example, a larger visualization object scope indicates a larger quantity of visible nodes. Content in the feature information of the node depends on content included in the visualization information in the service parameter. For example, if the visualization information includes energy efficiency, the feature information of the node includes the energy efficiency and a corresponding energy efficiency indicator. For another example, if the visualization information includes a system capacity, the feature information of the node includes the system capacity and a corresponding system capacity indicator.

It should be understood that the node in the visualization service may also be referred to as a visualization object, for example, a slice, a network element, UE, or the like.

In still another example, if the network digital twin service is a pre-evaluation service, an execution result of the pre-evaluation service may be a predicted value of an evaluation indicator, where the predicted value of the evaluation indicator is obtained based on a service parameter of the pre-evaluation service.

It should be understood that the network digital twin service and the corresponding execution result are described as an example. During actual implementation, the network digital twin service and the corresponding execution result may alternatively be designed in another manner. This is not limited.

S650: The second node sends the execution result to the first node, and correspondingly, the first node receives the execution result from the second node.

After obtaining the execution result of the network digital twin service, the second node may send the execution result to the first node. In this way, the requirement of the first node for the network digital twin service is met.

In this embodiment of this application, the first node serving as a management service consumer first sends the requirement information for the network digital twin service to the second node serving as a management service provider, so that the second node can create a corresponding network digital twin instance based on the requirement information in a customized manner, and implement the network digital twin service of the first node based on the network digital twin instance. This can meet a requirement of the management service consumer for a granularity of a network digital twin model. Moreover, the created network digital twin instance matches the requirement of the management service consumer. In this way, a waste of network digital twin resources is avoided.

In an embodiment, as shown in FIG. 7, the method may further include the following step.

S660: The second node sends, to the first node, first indication information indicating that the requirement for the network digital twin service can be met, and correspondingly, the first node receives the first indication information from the second node.

In step S620 in the embodiment shown in FIG. 6, it states that "if the second node determines that the capability of the second node can meet the requirement information, the second node may further send, to the first node, a type of information indicating that a requirement for the network digital twin service can be met". In this embodiment of this application, the "type of information" may be the first indication information, and the first indication information indicates that the capability of the second node can meet the requirement information. After receiving the first indication information, the first node can determine that the second node can meet a service requirement of the first node.

In this embodiment of this application, the second node notifies, by using the first indication information, the first node that the capability of the second node can meet the requirement information of the first node, so that the first node can determine whether to send the first request information for requesting the network digital twin service.

In an embodiment, as shown in FIG. 8, the method may further include the following step.

S670: The first node sends, to the second node, second request information for requesting creation of the network digital twin instance, and correspondingly, the second node receives the second request information from the first node.

In step S620 in the embodiment shown in FIG. 6, it states that "after the second node determines that the capability of the second node can meet the requirement information, and receives, from the first node, information indicating to start creation, the second node starts to create the network digital twin instance". In this embodiment of this application, "information indicating to start creation" may be the second request information. After receiving the second request information, the second node starts to create the network digital twin instance.

The second request information includes the first identification information indicating the requirement information.

Optionally, the second request information may further include the status information of the network digital twin instance. Refer to the description of the status information in step S620 in the embodiment shown in FIG. 6. The second node may generate the status information. In addition, in this embodiment of this application, alternatively, the first node may send the status information to the second node by using the second request information. In a phase of creating the network digital twin instance, the status information of the network digital twin instance included in the second request information is the creation state.

In a scenario in which the second request information is designed in the foregoing two manners, the network digital twin instance is created based on the requirement information. In other words, S620 may include the following step.

S6201: Create the network digital twin instance based on the requirement information.

In another implementation, the second request information includes the first identification information indicating the requirement information, and requirement information for a first service in the network digital twin service. The requirement information for the first service is unavailable for a service other than the first service. In other words, the first service is a type of service having a special requirement. The first service may also be referred to as a special service. The requirement information for the first service has impact on the network digital twin service in the following two aspects.
(1) It affects a scope of collecting data of a live network function and constructing a network digital twin model corresponding to the network digital twin instance (a scope and a granularity of physical objects that need to be twinned). (2) It affects presentation of a network digital twin management service result generated by using the network digital twin model.

In a scenario in which there is a special service, full requirement information of the first node includes two types: the requirement information in step S610 in the embodiment shown in FIG. 6 and the requirement information for the first service. From the perspective of data availability, the requirement information in step S610 belongs to a common dataset. In other words, the requirement information in step S610 is available for all services in the network digital twin service requested by the first node. The requirement information for the first service belongs to a dedicated dataset. In other words, the requirement information for the first service is available for only the first service in the network digital twin service requested by the first node, and the requirement information for the first service is unavailable (or has no effect) for a service other than the first service.

The following describes the first service by using an example. That the visualization capability is the first service is used as an example. The requirement information for the first service may be that the visualization granularity is 50 m x 50 m. This requirement is unavailable for other service requirements, for example, the pre-verification capability, the pre-evaluation capability, and the like.

It should be understood that an example in which the second request information includes the requirement information for the first service is used for description. During actual implementation, the requirement information for the first service may alternatively be carried in other information sent by the first node to the second node. For example, the requirement information for the first service may alternatively be carried in step S610 in the embodiment shown in FIG. 6. This is not limited.

Optionally, in addition to the first identification information indicating the requirement information, and the requirement information for the first service in the network digital twin service, the second request information may further include the status information of the network digital twin instance. In a scenario in which the second request information includes the requirement information for the first service, the network digital twin instance is created based on the requirement information and the requirement information for the first service. In this scenario, the network digital twin instance may include a first instance and a second instance. Correspondingly, as shown in FIG. 9, S620 may include the following steps.

S6202: Create the first instance based on the requirement information for the network digital twin service.

The first instance may also be referred to as a basic instance. The first instance is an instance constructed based on a common dataset (for example, the requirement information for the network digital twin service), and the first instance can be used for a service other than the first service.

S6203: Update the first instance based on the requirement information for the first service, to obtain the second instance.

During creation of the second instance, the first instance is updated based on the requirement information for the first service, to obtain the second instance. In other words, the second instance is an instance obtained after the first instance is refined. A model granularity of the second instance is higher than that of the first instance. The second instance can be used for the first service. For example, if the first service is the visualization capability, and requirement information for the visualization capability is that a visualization granularity is 50 m x 50 m, the parameter that the visualization granularity is 50 m x 50 m is added to the first instance, to obtain the second instance through training based on the data of the network function.

In this embodiment of this application, the full requirement information of the first node is classified into two types: the common dataset (for example, the requirement information for the network digital twin service) and the dedicated dataset (for example, the requirement information for the first service). Corresponding network digital twin instances are separately created, and corresponding network digital twin services are implemented based on the network digital twin instances. In this way, a granularity of the network digital twin service is improved.

In an embodiment, as shown in FIG. 10, the method may further include the following step.

S680: The second node sends, to the first node, the second identification information indicating the network digital twin instance, and correspondingly, the first node receives the second identification information from the second node.

In step S620 in the embodiment shown in FIG. 6, it states that "during creation of the network digital twin instance, corresponding identification information indicating network digital twin instances may be generated". In this embodiment of this application, the "identification information indicating network digital twin instances" may be the second identification information, to distinguish between different network digital twin instances.

In this embodiment of this application, the second node sends the second identification information to the first node. In this way, when requesting the network digital twin service, the first node can use the second identification information to indicate to invoke which network digital twin instance.

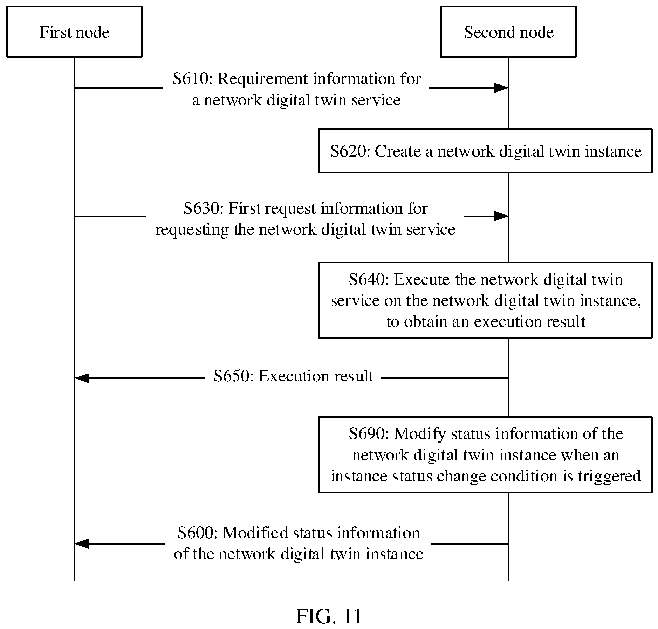

In an embodiment, as shown in FIG. 11, the method may further include the following steps.

S690: The second node modifies the status information of the network digital twin instance when a condition for triggering an instance status change is met.

Refer to the status information of the network digital twin instance described in step S620 in the embodiment shown in FIG. 6. Initial status information of the network digital twin instance is the creation state. The instance status change condition may be flexibly set. For example, the instance status change condition may be that the network digital twin instance has been created. In this case, the status information of the network digital twin instance is modified from the creation state into the activated state. The instance status change condition may alternatively be that the network digital twin instance starts to execute a service. In this case, the status information of the network digital twin instance is modified from the activated state into the running state. The instance status change condition may alternatively be that the network digital twin instance suspends execution of the service. In this case, the status information of the network digital twin instance is modified from the running state to the suspended running state. The instance status change condition may alternatively be that the network digital twin instance is to be modified. In this case, the status information of the network digital twin instance is modified to the deactivated state. The instance status change condition may alternatively be that the network digital twin instance is to be disabled. In this case, the status information of the network digital twin instance is modified to the disabled state.

It should be understood that the instance status change condition described above is an example for description. During specific implementation, there may be another design. This is not limited.

S600: The second node sends the modified status information of the network digital twin instance to the first node, and correspondingly, the first node receives the modified status information of the network digital twin instance from the second node.

After modifying the status information of the network digital twin instance, the second node sends the modified status information of the network digital twin instance to the first node, so that the first node can subsequently request the network digital twin service based on the modified status information of the network digital twin instance. For example, a network digital twin service A needs to be implemented based on a network digital twin instance 1. If modified status information of the network digital twin instance 1 sent by the second node to the first node is the running state, the first node may temporarily suspend the request for the network digital twin service A, and not request the network digital twin service A from the second node until the modified status information of the network digital twin instance 1 sent by the second node to the first node is the activated state.

With reference to the foregoing embodiment, it can be learned that, in this embodiment of this application, the first node serving as a management service consumer first sends the requirement information for the network digital twin service to the second node serving as a management service provider, so that the second node can create a corresponding network digital twin instance based on the requirement information in a customized manner, and implement the network digital twin service of the first node based on the network digital twin instance. This can meet a requirement of the management service consumer for a granularity of the network digital twin model. Moreover, the created network digital twin instance matches the requirement of the management service consumer. In this way, a waste of network digital twin resources is avoided. In addition, a lifecycle management mechanism of the network digital twin instance is designed. The status information of the network digital twin instance is generated and changed to implement lifecycle management of the network digital twin instance.

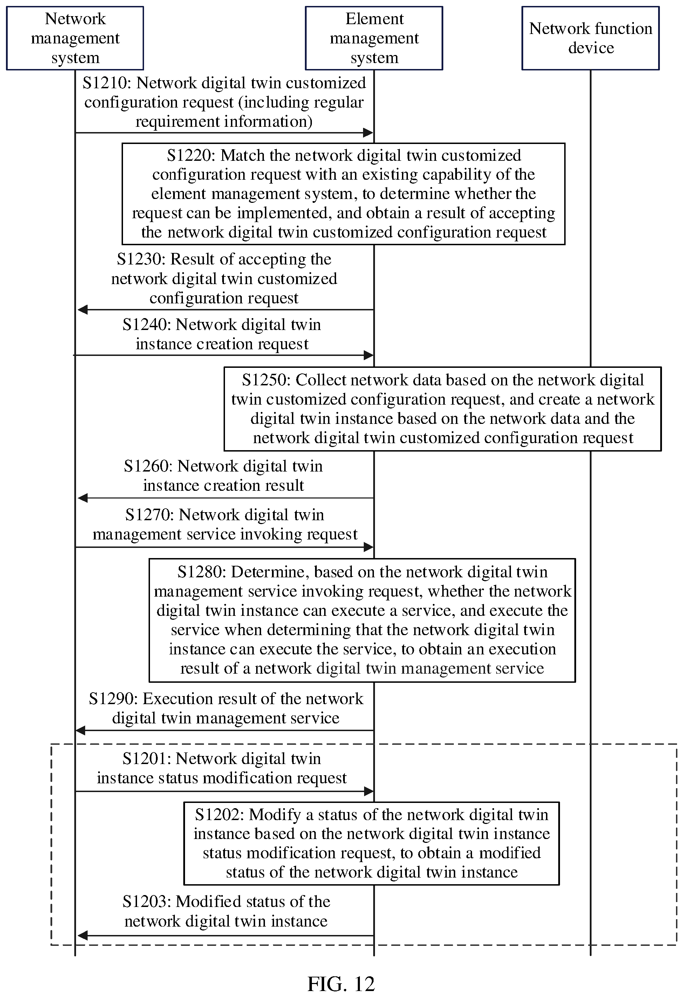

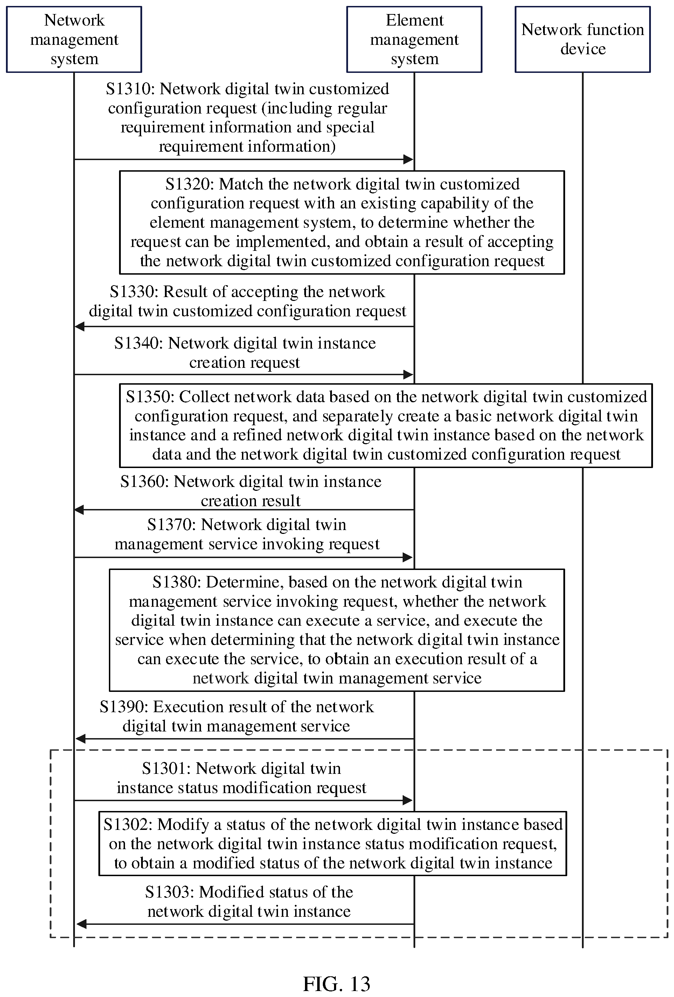

An example in which the communication system shown in FIG. 2 is applicable to the communication architecture shown in FIG. 3 is used below. With reference to the embodiments shown in FIG. 6 to FIG. 11, several communication methods provided in embodiments of this application are provided, as shown in FIG. 12 and FIG. 13.

In a possible implementation, in this solution, for all network digital twin services, a customized network digital twin instance is constructed based on a common dataset. This can meet a requirement of a management service consumer for a granularity of a network digital twin model. As shown in FIG. 12, the communication method includes the following steps.

S1210: A network management system sends a network digital twin customized configuration request to an element management system, and correspondingly, the element management system receives the network digital twin customized configuration request from the network management system.

The network digital twin customized configuration request may include requirement information for a network digital twin service (which may be referred to as regular requirement information). The requirement information includes an identifier of the network management system, a required network digital twin service, a validity period of the network digital twin service, physical object information of network digital twin, a frequency of synchronization between a network digital twin instance and network data, and the like. For a description of the requirement information for the network digital twin service, refer to the description in step S610 in the embodiment shown in FIG. 6. Details are not described herein again.

S1220: The element management system matches the network digital twin customized configuration request with an existing capability of the element management system, to determine whether the request can be implemented, and obtain a result of accepting the network digital twin customized configuration request.

The result of accepting the network digital twin customized configuration request is a type of information indicating whether a requirement for the network digital twin service can be met. For example, the result of accepting the network digital twin customized configuration request may be the first indication information indicating that the requirement for the network digital twin service can be met in the embodiment shown in FIG. 7. For the first indication information, refer to the description in step S660 in the embodiment shown in FIG. 7. Details are not described herein again.

Alternatively, the result of accepting the network digital twin customized configuration request may be notification information notifying that the element management system cannot meet the network digital twin customized configuration request. Optionally, the notification information notifying that the second node cannot meet the network digital twin customized configuration request may further carry a reason that the second node cannot meet the network digital twin customized configuration request.

Optionally, the element management system may further store the network digital twin customized configuration request.

S1230: The element management system sends the result of accepting the network digital twin customized configuration request to the network management system. Correspondingly, the network management system receives the result of accepting the network digital twin customized configuration request from the element management system.

When the network management system determines that the result of accepting the network digital twin customized configuration request indicates that the element management system can meet the requirement for the network digital twin service, the following is performed.

S1240: The network management system sends a network digital twin instance creation request to the element management system.

The network digital twin instance creation request may carry the identifier of the network management system (or referred to as the network digital twin customized configuration request). Optionally, the network digital twin instance creation request may further carry a network digital twin instance status. The former is used to match the network digital twin customized configuration request, and the latter is used to update a status of the network digital twin instance to creation.

For example, the network digital twin instance creation request may include the second request information in step S670 in the embodiment shown in FIG. 8. The second request information includes first identification information of the network digital twin customized configuration request. Optionally, the second request information may further include status information of the network digital twin instance.

S1250: The element management system collects network data from a network function device based on the network digital twin customized configuration request, and creates the network digital twin instance based on the network data and the network digital twin customized configuration request.

During creation of the network digital twin instance, an identifier of the network digital twin instance may be generated, the status of the network digital twin instance is recorded, and the identifier of the network management system is associated with the identifier of the network digital twin instance. The network data may be collected based on a network digital twin granularity and network digital twin refresh frequency.

For example, the identifier of the network digital twin instance may include the second identification information in step S680 in the embodiment shown in FIG. 10. The status of the network digital twin instance may include the status information of the network digital twin instance in the second request information in step S670 in the embodiment shown in FIG. 8.

S1260: The element management system sends a network digital twin instance creation result to the network management system, and correspondingly, the network management system receives the instance creation result from the element management system.

The network digital twin instance creation result indicates that the network digital twin instance is successfully created or fails to be created. If the network digital twin instance is successfully created, the network digital twin instance creation result may include the identifier of the network digital twin instance. For example, the identifier of the network digital twin instance may include the second identification information indicating the network digital twin instance in step S680 in the embodiment shown in FIG. 10. If the network digital twin instance fails to be created, the network digital twin instance creation result may include a failure cause.

S1270: The network management system sends a network digital twin management service invoking request to the element management system, and correspondingly, the element management system receives the network digital twin management service invoking request from the network management system.

The network digital twin management service invoking request carries a management service parameter, an identifier of the network digital twin customized configuration request, and/or the identifier of the network digital twin instance, to indicate which network digital twin instance needs to execute a management service. The management service parameter is a related parameter for the network digital twin instance to implement the network digital twin management service. This is not limited.

For example, the network digital twin management service invoking request may include the first request information in step S630 in the embodiment shown in FIG. 6.

S1280: The element management system determines, based on the network digital twin management service invoking request, whether the network digital twin instance can execute the service, and executes the service when determining that the network digital twin instance can execute the service, to obtain an execution result of the network digital twin management service.

Whether the network digital twin instance can execute the service may be determined based on the network digital twin management service invoking request. For example, whether a status of the corresponding network digital twin instance is an activated state may be determined based on the network digital twin management service invoking request. If yes, the service can be executed. Otherwise, the service cannot be executed.

After receiving the network digital twin management service invoking request, the element management system executes the network digital twin management service on the network digital twin instance corresponding to the network digital twin management service invoking request. There may be a plurality of types of network digital twin management services, and corresponding execution results of the network digital twin management services may also be different. For example, if the network digital twin management service is a pre-verification service, an execution result of the pre-verification service is impact on a network after one or more to-be-verified policies are executed in the network digital twin instance. For another example, if the network digital twin management service is a visualization service, an execution result of the visualization service is displaying feature information of one or more nodes (for example, displaying an interface based on a user-friendly interface design). For another example, if the network digital twin management service is a pre-evaluation service, an execution result of the pre-evaluation service is a predicted value of an evaluation indicator, where the predicted value of the evaluation indicator is obtained based on a service parameter of the pre-evaluation service.

S1290: The element management system sends the execution result of the network digital twin management service to the network management system, and correspondingly, the network management system receives the execution result of the network digital twin management service from the element management system.

Optionally, the communication method may further include the following steps.

S1201: The network management system sends a network digital twin instance status modification request to the element management system, and correspondingly, the element management system receives the network digital twin instance status modification request from the network management system.

A trigger condition for triggering the network management system to send the network digital twin instance status modification request may be flexibly designed. For example, the trigger condition may include suspending running of a network digital twin instance to save resources, activating the instance to prepare for the network digital twin management service, and the like.

For a description of the status of the network digital twin instance, refer to the description of the status information of the network digital twin instance in step S620 in the embodiment shown in FIG. 6. Details are not described herein again.

S1202: The element management system modifies the status of the network digital twin instance based on the network digital twin instance status modification request, to obtain a modified status of the network digital twin instance.

After receiving the network digital twin instance status modification request, the element management system may modify the status of the corresponding network digital twin instance, to obtain the modified status of the network digital twin instance.

In an embodiment, the element management system may be further configured with an instance status change condition, and autonomously modifies the status information of the network digital twin instance based on the instance status change condition. For specific implementation, refer to the description of related implementation in step S690 in the embodiment shown in FIG. 11. Details are not described herein again.

S1203: The element management system sends the modified status of the network digital twin instance to the network management system, and correspondingly, the network management system receives the modified status of the network digital twin instance from the element management system.

For a description of S1203, refer to the description of related implementation in step S600 in the embodiment shown in FIG. 11. Details are not described herein again.

In another possible implementation, similar to that in the embodiment shown in FIG. 12, a dedicated dataset, that is, special requirement information for a special service, is introduced in this solution. First, a customized basic network digital twin instance is constructed based on a common dataset, and a refined network digital twin instance is created based on the basic network digital twin instance in combination with the special requirement information for the special service. The basic network digital twin instance is used to implement a network digital twin service (referred to as a regular service) other than the special service. The refined network digital twin instance is used to implement a network digital twin service of the special service. This further meets a requirement of a management service consumer for a granularity of a network digital twin model. As shown in FIG. 13, the communication method includes the following steps.

S1310: A network management system sends a network digital twin customized configuration request to an element management system, and correspondingly, the element management system receives the network digital twin customized configuration request from the network management system.

The network digital twin customized configuration request may include regular requirement information for a regular network digital twin service and special requirement information for a special service. For example, the regular requirement information may be the requirement information for the network digital twin service in the embodiment shown in FIG. 6. For a description of the requirement information for the network digital twin service, refer to the corresponding description in step S610 in the embodiment shown in FIG. 6. Details are not described herein again.

For example, the special requirement information for the special service may include the requirement information for the first service in the embodiment shown in FIG. 8. For a description of the requirement information for the first service, refer to the corresponding description in step S670 in the embodiment shown in FIG. 8. Details are not described herein again.

It should be understood that an example in which the special requirement information for the special service is carried in the network digital twin customized configuration request for sending is used for description. During specific implementation, the network management system may alternatively send the special requirement information for the special service to the element management system at another occasion. For example, the special requirement information for the special service is carried in a network digital twin instance creation request in S1340 in the following. This is not limited.

S1320: The element management system matches the network digital twin customized configuration request with an existing capability of the element management system, to determine whether the request can be implemented, and obtain a result of accepting the network digital twin customized configuration request.

The result of accepting the network digital twin customized configuration request is a type of information indicating whether a requirement for the network digital twin service can be met. For example, the result of accepting the network digital twin customized configuration request may be the first indication information indicating that the requirement for the network digital twin service can be met in the embodiment shown in FIG. 7. For the first indication information, refer to the description in step S660 in the embodiment shown in FIG. 7. Details are not described herein again.

Alternatively, the result of accepting the network digital twin customized configuration request may be notification information notifying that the element management system cannot meet the network digital twin customized configuration request. Optionally, the notification information notifying that the second node cannot meet the network digital twin customized configuration request may further carry a reason that the second node cannot meet the network digital twin customized configuration request.

For example, if the network digital twin customized configuration request includes the requirement information for the network digital twin service and the special requirement information for the special service, the result of accepting the network digital twin customized configuration request may include the following two items: indication information indicating whether a requirement for the network digital twin service is met, and indication information indicating whether a special requirement for the special service is met.

Optionally, the element management system may further store the network digital twin customized configuration request.

S1330: The element management system sends the result of accepting the network digital twin customized configuration request to the network management system. Correspondingly, the network management system receives the result of accepting the network digital twin customized configuration request from the element management system.

When the network management system determines that the result of accepting the network digital twin customized configuration request indicates that the element management system can meet the requirement for the network digital twin service, the following is performed.

S1340: The network management system sends the network digital twin instance creation request to the element management system.

The network digital twin instance creation request may carry an identifier of the network management system (or referred to as the network digital twin customized configuration request). Optionally, the network digital twin instance creation request may further carry a network digital twin instance status. The former is used to match the network digital twin customized configuration request, and the latter is used to update a status of the network digital twin instance to creation.

For example, the network digital twin instance creation request may include the second request information in step S670 in the embodiment shown in FIG. 8. The second request information includes first identification information of the network digital twin customized configuration request. Optionally, the second request information may further include status information of the network digital twin instance.

Optionally, the network digital twin instance creation request may further include the special requirement information for the special service.

S1350: The element management system collects network data from a network function device based on the network digital twin customized configuration request, and separately creates a basic network digital twin instance and a refined network digital twin instance based on the network data and the network digital twin customized configuration request.

During creation of the network digital twin instance, an identifier of the network digital twin instance may be generated, the status of the network digital twin instance is recorded, and the identifier of the network management system is associated with the identifier of the network digital twin instance. The network data may be collected based on a network digital twin granularity and network digital twin refresh frequency.

Specifically, the basic instance is first created based on the requirement information for the network digital twin service. The basic instance is an instance constructed based on a common dataset (for example, the requirement information for the network digital twin service), and the basic instance can be used for a regular service other than the special service. Then, the basic instance is updated based on the special requirement information for the special service, to obtain the refined network digital twin instance.

During creation of the refined network digital twin instance, the basic network digital twin instance is updated based on the special requirement information for the special service, to obtain the refined network digital twin instance. In other words, the refined network digital twin instance is an instance obtained after the basic network digital twin instance is refined. A model granularity of the refined network digital twin instance is higher than that of the basic network digital twin instance. The refined network digital twin instance can be used for the special service. For example, if the special service is a visualization capability, and requirement information for the visualization capability is that a visualization granularity is 50 m x 50 m, the parameter that the visualization granularity is 50 m x 50 m is added to the basic network digital twin instance, to obtain the refined network digital twin instance through training based on the data of the network function device.

For example, the identifier of the network digital twin instance may include the second identification information in step S680 in the embodiment shown in FIG. 10. The status of the network digital twin instance may include the status information of the network digital twin instance in the second request information in step S670 in the embodiment shown in FIG. 8.

S1360: The element management system sends a network digital twin instance creation result to the network management system, and correspondingly, the network management system receives the instance creation result from the element management system.

The network digital twin instance creation result indicates that the network digital twin instance is successfully created or fails to be created. If the network digital twin instance is successfully created, the network digital twin instance creation result may include the identifier of the network digital twin instance. For example, the identifier of the network digital twin instance may include the second identification information indicating the network digital twin instance in step S680 in the embodiment shown in FIG. 10. If the network digital twin instance fails to be created, the network digital twin instance creation result may include a failure cause.

S1370: The network management system sends a network digital twin management service invoking request to the element management system, and correspondingly, the element management system receives the network digital twin management service invoking request from the network management system.

The network digital twin management service invoking request carries a management service parameter, an identifier of the network digital twin customized configuration request, and/or the identifier of the network digital twin instance, to indicate which network digital twin instance needs to execute the management service. The management service parameter is a related parameter for the network digital twin instance to implement the network digital twin management service. This is not limited.

For example, the network digital twin management service invoking request may include the first request information in step S630 in the embodiment shown in FIG. 6.

S1380: The element management system determines, based on the network digital twin management service invoking request, whether the network digital twin instance can execute the service, and executes the service when determining that the network digital twin instance can execute the service, to obtain an execution result of the network digital twin management service.

Whether the network digital twin instance can execute the service may be determined based on the network digital twin management service invoking request. For example, whether a status of the corresponding network digital twin instance is an activated state may be determined based on the network digital twin management service invoking request. If yes, the service can be executed. Otherwise, the service cannot be executed.

For example, the network digital twin management service invoking request may request both the special service and the regular service. In other words, the network digital twin management service invoking request may request to invoke both the basic network digital twin instance and the refined network digital twin instance. A process of determining whether the basic network digital twin instance can execute a service and a process of determining whether the refined network digital twin instance can execute a service are independent of each other. That is, if it can be determined that the basic network digital twin instance can execute the regular service, but the refined network digital twin instance cannot execute the special service, the regular service is implemented based on the basic network digital twin instance. For another example, if it is determined that the basic network digital twin instance cannot execute the regular service, but the refined network digital twin instance can execute the special service, the special service is implemented based on the refined network digital twin instance. For another example, if it is determined that the basic network digital twin instance can execute the regular service, and the refined network digital twin instance can also execute the special service, the regular service is implemented based on the basic network digital twin instance, and the special service is implemented based on the refined network digital twin instance.

After receiving the network digital twin management service invoking request, the element management system executes the network digital twin management service on the network digital twin instance corresponding to the network digital twin management service invoking request. There may be a plurality of types of network digital twin management services, and corresponding execution results of the network digital twin management services may also be different. For example, if the network digital twin service is a pre-verification service, an execution result of the pre-verification service is impact on a network after one or more to-be-verified policies are executed on the network digital twin instance. For another example, if the network digital twin service is a visualization service, an execution result of the visualization service is displaying feature information of one or more nodes (for example, displaying an interface based on a user-friendly interface design). For another example, if the network digital twin service is a pre-evaluation service, an execution result of the pre-evaluation service is a predicted value of an evaluation indicator, where the predicted value of the evaluation indicator is obtained based on a service parameter of the pre-evaluation service.

S1390: The element management system sends the execution result of the network digital twin management service to the network management system, and correspondingly, the network management system receives the execution result of the network digital twin management service from the element management system.

Optionally, the communication method may further include the following steps.

S1301: The network management system sends a network digital twin instance status modification request to the element management system, and correspondingly, the element management system receives the network digital twin instance status modification request from the network management system.

A trigger condition for triggering the network management system to send the network digital twin instance status modification request may be flexibly designed. For example, the trigger condition may include suspending running of a network digital twin instance to save resources, activating the instance to prepare for the network digital twin management service, and the like.

For a description of the status of the network digital twin instance, refer to the description of the status information of the network digital twin instance in step S620 in the embodiment shown in FIG. 6. Details are not described herein again.

S1302: The element management system modifies the status of the network digital twin instance based on the network digital twin instance status modification request, to obtain a modified status of the network digital twin instance.

After receiving the network digital twin instance status modification request, the element management system may modify the status of the corresponding network digital twin instance, to obtain the modified status of the network digital twin instance.

In an embodiment, the element management system may be further configured with an instance status change condition, and autonomously modifies the status information of the network digital twin instance based on the instance status change condition. For specific implementation, refer to the description of related implementation in step S690 in the embodiment shown in FIG. 11. Details are not described herein again.

S1303: The element management system sends the modified status of the network digital twin instance to the network management system, and correspondingly, the network management system receives the modified status of the network digital twin instance from the element management system.

For a description of S1303, refer to the description of related implementation in step S600 in the embodiment shown in FIG. 11. Details are not described herein again.

In an embodiment of this application, the communication system shown in FIG. 2 is also applicable to the communication architecture shown in FIG. 4, and implements the communication methods described in the embodiments shown in FIG. 6 to FIG. 11. In comparison with implementation of the communication method in the communication architecture shown in FIG. 12 or FIG. 13, a third-party node is introduced as a management service consumer in this embodiment of this application. A network management system serves as an intermediate node to implement data transmission between the third-party node and an element management system, to implement the communication methods described in the embodiments shown in FIG. 6 to FIG. 11. For a specific implementation process, refer to the description in the embodiment shown in FIG. 12 or FIG. 13. Details are not described herein again.

The foregoing mainly describes the solutions provided in embodiments of this application from a perspective of execution logic of each step. It may be understood that, to implement the foregoing functions, each node, for example, the first node or the second node, includes corresponding hardware structures and/or software modules for performing the functions. A person skilled in the art should easily be aware that, in combination with algorithm steps of the examples described in embodiments disclosed in this specification, the method in embodiments of this application can be implemented by hardware, software, or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the first node or the second node may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely logical function division. During actual implementation, another division manner may be used.

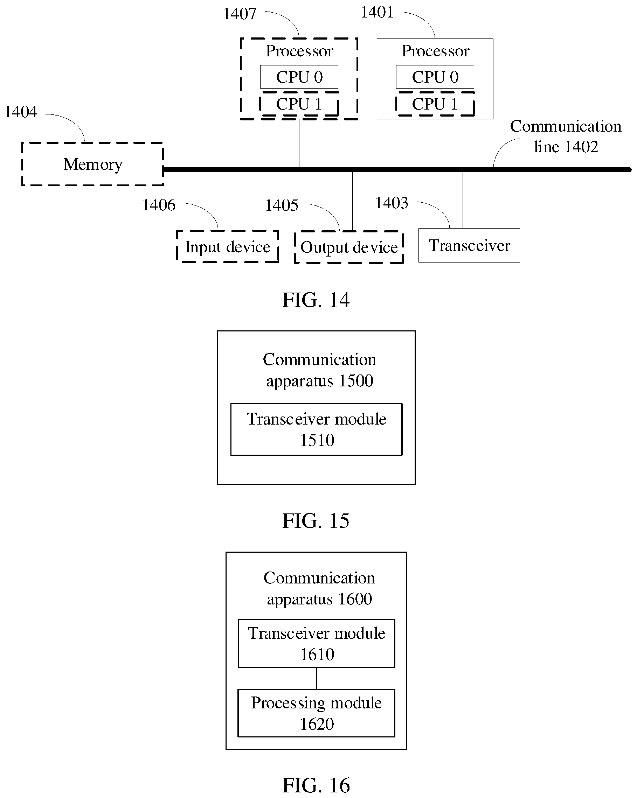

During specific implementation, network elements shown in this application may use a composition structure shown in FIG. 14 or include components shown in FIG. 14. FIG. 14 is a diagram of a structure of a communication apparatus according to an embodiment of this application. When the communication apparatus has a function of the first node in embodiments of this application, the communication apparatus may be the first node, or a chip or a system on chip in the first node. When the communication apparatus has a function of the second node in embodiments of this application, the communication apparatus may be the second node, or a chip or a system on chip in the second node.

As shown in FIG. 14, the communication apparatus may include a processor 1401, a communication line 1402, a transceiver 1403, and a memory 1404. The processor 1401, the memory 1404, and the transceiver 1403 may be connected through the communication line 1402. In an example, the processor 1401 may include one or more CPUs, for example, a CPU 0 and a CPU 1 shown in FIG. 14.

In an optional implementation, the communication apparatus includes a plurality of processors. For example, in addition to the processor 1401 shown in FIG. 14, the communication apparatus may further include a processor 1407.

The processor 1401 may be a central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. The processor 1401 may alternatively be another apparatus having a processing function, for example, a circuit, a component, a software module, or the like.

The communication line 1402 is configured to transmit information between the components included in the communication apparatus.

The transceiver 1403 is configured to communicate with another device or another communication network. The another communication network may be an Ethernet, a radio access network, a wireless local area network (wireless local area network, WLAN), or the like. The transceiver 1403 may be an interface circuit, a pin, a radio frequency module, a transceiver, or any apparatus that can implement communication.

Further, the communication apparatus may include the memory 1404. The memory 1404 is configured to store instructions. The instructions may be a computer program instructions.

The memory 1404 may be a read-only memory (read-only memory, ROM) or another type of static storage device that can store static information and/or instructions, may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM) or another optical disk storage, an optical disc storage, a magnetic disk storage medium, or another magnetic storage device. The optical disc storage includes a compressed optical disc, a laser disc, an optical disc, a digital versatile disc, a Blu-ray disc, or the like.

It should be noted that the memory 1404 may be independent of the processor 1401, or may be integrated with the processor 1401. The memory 1404 may be configured to store instructions, program code, some data, or the like. The memory 1404 may be located inside the communication apparatus, or may be located outside the communication apparatus. This is not limited. When executing the instructions stored in the memory 1404, the processor 1401 may implement the method provided in embodiments of this application.

In an optional implementation, the communication apparatus further includes an output device 1405 and an input device 1406. For example, the input device 1406 is a device, for example, a keyboard, a mouse, a microphone, a joystick, or the like, and the output device 1405 is a device, for example, a display, a speaker (speaker), or the like.

It should be noted that the communication apparatus may be a desktop computer, a portable computer, a network server, a mobile phone, a tablet computer, a wireless terminal, an embedded device, a chip system, or a device having a structure similar to that shown in FIG. 14. In addition, the composition structure shown in FIG. 14 does not constitute a limitation on the communication apparatus. In addition to the components shown in FIG. 14, the communication apparatus may include more or fewer components than those shown in the figure, some components may be combined, or different component arrangements may be used.

In this embodiment of this application, the chip system may include a chip, or may include a chip and another discrete component.

FIG. 15 is a diagram of a structure of a communication apparatus 1500. The communication apparatus is used for a first node serving as a management service consumer. Modules in the apparatus shown in FIG. 15 have functions of implementing corresponding steps shown in FIG. 6 to FIG. 13, and can achieve corresponding technical effects. For beneficial effects corresponding to steps performed by the modules, refer to the description in the corresponding steps shown in FIG. 6 to FIG. 13. Details are not described again. The functions may be implemented by hardware, or may be implemented by hardware executing corresponding software. The hardware or the software includes one or more modules corresponding to the functions. For example, the communication apparatus includes the following module.

A transceiver module 1510 is configured to send requirement information for a network digital twin service. The transceiver module 1510 is further configured to send first request information for requesting the network digital twin service. The transceiver module 1510 is further configured to receive an execution result of the network digital twin service executed on a network digital twin instance.

FIG. 16 is a diagram of a structure of a communication apparatus 1600. The communication apparatus is used for a second node serving as a management service provider. Modules in the apparatus shown in FIG. 16 have functions of implementing corresponding steps shown in FIG. 6 to FIG. 13, and can achieve corresponding technical effects. For beneficial effects corresponding to steps performed by the modules, refer to the description in the corresponding steps shown in FIG. 6 to FIG. 13. Details are not described again. The functions may be implemented by hardware, or may be implemented by hardware executing corresponding software. The hardware or the software includes one or more modules corresponding to the functions. For example, the communication apparatus includes the following modules.

A transceiver module 1610 is configured to receive requirement information for a network digital twin service. A processing module 1620 is configured to create a network digital twin instance based on the requirement information. The transceiver module 1610 is further configured to receive first request information for requesting the network digital twin service. The transceiver module 1610 is further configured to send an execution result of the network digital twin service executed on the network digital twin instance.

In embodiments of this application, the first node serving as a management service consumer first sends the requirement information for the network digital twin service to the second node serving as a management service provider, so that the second node can create a corresponding network digital twin instance based on the requirement information in a customized manner, and implement the network digital twin service of the first node based on the network digital twin instance. This can meet a requirement of the management service consumer for a granularity of a network digital twin model. Moreover, the created network digital twin instance matches the requirement of the management service consumer. In this way, a waste of network digital twin resources is avoided.

An embodiment of this application provides a communication system. The communication system includes a first node and a second node. The first node may have a function of the communication apparatus 1500, and the second node may have a function of the communication apparatus 1600.

An embodiment of this application further provides a computer-readable storage medium. All or a part of processes in the foregoing method embodiments may be implemented by a computer program instructing related hardware. The program may be stored in the computer-readable storage medium. When the program is executed, the processes in the foregoing method embodiments may be performed. The computer-readable storage medium may be an internal storage unit, for example, including a data transmit end and/or a data receive end, of the communication apparatus in any one of the foregoing embodiments. For example, the computer-readable storage medium may be a hard disk drive or a memory of the terminal apparatus. The computer-readable storage medium may alternatively be an external storage device of the terminal apparatus, for example, a plug-in hard disk drive, a smart media card (smart media card, SMC), a secure digital (secure digital, SD) card, a flash card (flash card), or the like that is configured on the terminal apparatus. Further, the computer-readable storage medium may alternatively include both an internal storage unit and an external storage device of the terminal apparatus. The computer-readable storage medium is configured to store the computer program and other programs and data that are required by the terminal apparatus. The computer-readable storage medium may be further configured to temporarily store data that has been output or is to be output.

An embodiment of this application further provides computer instructions. All or a part of the processes in the foregoing method embodiments may be implemented by the computer instructions instructing related hardware (for example, a computer, a processor, a network device, a terminal, or the like). The computer instructions may be stored in the computer-readable storage medium.

An embodiment of this application further provides a chip system. The chip system may include a chip, or may include a chip and another discrete component. This is not limited. The chip system includes a controller and an interface circuit. All or a part of the processes in the foregoing method embodiments may be implemented by the chip system. For example, the chip system may be configured to implement the function performed by the first node or the second node in the foregoing method embodiments.

In a possible design, the chip system further includes a memory. The memory is configured to store program instructions and/or data. When the chip system runs, the processor executes the program instructions stored in the memory, so that the chip system performs the function performed by the first node or the second node in the foregoing method embodiments.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor or any conventional processor or the like. The steps of the methods disclosed with reference to embodiments of this application may be directly performed by a hardware processor, or may be performed by using a combination of hardware in the processor and a software module.

In embodiments of this application, the memory may be a non-volatile memory, for example, a hard disk drive (hard disk drive, HDD), a solid-state drive (solid-state drive, SSD), or the like, or may be a volatile memory (volatile memory), for example, a random access memory. The memory is any other medium that can carry or store expected program code in a form of instructions or a data structure and that can be accessed by a computer, but is not limited thereto. Alternatively, the memory in embodiments of this application may be a circuit or any other apparatus that can implement a storage function, and is configured to store instructions and/or data.

It should be noted that, in the specification, claims, and accompanying drawings of this application, the terms "first", "second", and the like are intended to distinguish between different objects but do not indicate a particular order. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

It should be understood that, in embodiments of this application, "at least one (item)" means one or more, "a plurality of" means two or more, "at least two (items)" means two, three, or more, and "and/or" is used to describe an association relationship between associated objects and indicates that three relationships may exist. For example, "A and/or B" may indicate the following three cases: Only A exists, only B exists, and both A and B exist, where A and B may be singular or plural. The character "/" usually indicates an "or" relationship between the associated objects. "At least one of the following items (pieces)" or a similar expression thereof means any combination of these items, including any combination of singular items (pieces) or plural items (pieces). For example, at least one (item) of a, b, or c may indicate a, b, c, a and b, a and c, b and c, or a, b, and c, where a, b, and c may be singular or plural. It should be understood that, in embodiments of this application, "B corresponding to A" indicates that B is associated with A. For example, B may be determined based on A. It should be further understood that determining B based on A does not mean that B is determined based only on A. B may alternatively be determined based on A and/or other information. In addition, "connection" in embodiments of this application means various connection manners such as direct connections, indirect connections, or the like, for implementing communication between devices. This is not limited in embodiments of this application.

Unless otherwise specified, "transmission" (transmit/transmission) in embodiments of this application means bidirectional transmission, and includes a sending action and/or a receiving action. Specifically, "transmission" in embodiments of this application includes data sending, data receiving, or data sending and receiving. In other words, data transmission herein includes uplink data transmission and/or downlink data transmission. Data may include a channel and/or a signal. Uplink data transmission is uplink channel transmission and/or uplink signal transmission, and downlink data transmission is downlink channel transmission and/or downlink signal transmission. In embodiments of this application, a "network" and a "system" express a same concept, and a communication system is a communication network.

The foregoing description about the foregoing implementations allows a person skilled in the art to clearly understand that, for the purpose of convenient and brief description, division into the foregoing functional modules is merely used as an example for description. During actual application, the foregoing functions can be allocated to different functional modules for implementation as required. In other words, an inner structure of an apparatus is divided into different functional modules to implement all or a part of the functions described above.

In the several embodiments provided in this application, it should be understood that the disclosed apparatus and method may be implemented in other manners. For example, the described apparatus embodiments are merely examples. For example, division into the modules or units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may be or may not be physically separate, and parts displayed as units may be one or more physical units, may be located in one place, or may be distributed in different places. A part or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit. When the integrated unit is implemented in the form of a software functional unit and sold or used as an independent product, the integrated unit may be stored in a readable storage medium. Based on this understanding, the technical solutions in embodiments of this application essentially, or a part of the technical solutions that contribute to the conventional technology, or all or a part of the technical solutions may be embodied in a form of a software product. The software product is stored in a storage medium, and includes several instructions used to enable a device, for example, a single-chip microcomputer, a chip, or a processor (processor) to perform all or a part of the steps of the methods in embodiments of this application. The foregoing storage medium includes any medium that can store program code, such as a USB flash drive, a removable hard disk, a ROM, a RAM, a magnetic disk, an optical disc, or the like.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A communication method, comprising:
receiving requirement information for a network digital twin service;
creating a network digital twin instance based on the requirement information for the network digital twin service;
receiving first request information for requesting the network digital twin service; and
sending an execution result of the network digital twin service executed on the network digital twin instance.

2. The communication method according to claim 1, wherein the requirement information for the network digital twin service comprises first identification information indicating the requirement information for the network digital twin service, and at least one of: a required network digital twin service, a validity period of the network digital twin service, a source of data required for creating the network digital twin instance, or a frequency of synchronization between the network digital twin instance and network data.

3. The communication method according to claim 1 or 2, wherein the method further comprises:
sending first indication information, wherein the first indication information indicates that the requirement information for the network digital twin service is met.

4. The communication method according to any one of claims 1 to 3, wherein the method further comprises:
before receiving the first request information, receiving second request information for requesting creation of the network digital twin instance.

5. The communication method according to claim 4, wherein the second request information comprises the first identification information, or the second request information comprises the first identification information and status information of the network digital twin instance; and the method further comprises:
creating the network digital twin instance based on the requirement information for the network digital twin service.

6. The communication method according to claim 4, wherein the second request information comprises the first identification information, and requirement information for a first service in the network digital twin service, or the second request information comprises the first identification information, the requirement information for the first service, and status information of the network digital twin instance; the requirement for the first service is unavailable for a service other than the first service, and the network digital twin instance comprises a first instance and a second instance; and the method further comprises:
creating the first instance based on the requirement information for the network digital twin service, wherein the first instance is used for a service other than the first service; and
updating the first instance based on the requirement information for the first service, to obtain the second instance, wherein the second instance is used for the first service.

7. The communication method according to any one of claims 4 to 6, wherein the method further comprises:
sending second identification information indicating the network digital twin instance.

8. The communication method according to any one of claims 5 to 7, wherein the method further comprises:
modifying the status information of the network digital twin instance when a condition for triggering an instance status change is met; and
sending the modified status information of the network digital twin instance.

9. The communication method according to any one of claims 1 to 8, wherein the first request information comprises a service parameter for requesting the network digital twin service, and at least one of: the second identification information indicating the network digital twin instance or the first identification information.

10. The communication method according to any one of claims 1 to 9, wherein the network digital twin service comprises a pre-verification service, a visualization service, or a pre-evaluation service; an execution result of the pre-verification service is a network indicator value obtained after a to-be-verified policy is executed in the network digital twin instance, an execution result of the visualization service is visualization data of a visualization object, and an execution result of the pre-evaluation service is a predicted value of an evaluation indicator of the pre-evaluation service.

11. A communication method, comprising:
sending requirement information for a network digital twin service;
sending first request information for requesting the network digital twin service; and
receiving an execution result of the network digital twin service executed on a network digital twin instance.

12. The communication method according to claim 11, wherein the requirement information for the network digital twin service comprises first identification information indicating the requirement information for the network digital twin service, and at least one of: a required network digital twin service, a validity period of the network digital twin service, a source of data required for creating the network digital twin instance, or a frequency of synchronization between the network digital twin instance and network data.

13. The communication method according to claim 11 or 12, wherein the method further comprises:
receiving first indication information, wherein the first indication information indicates that the requirement information for the network digital twin service is met.

14. The communication method according to any one of claims 11 to 13, wherein the method further comprises:
before sending the first request information, sending second request information for requesting creation of the network digital twin instance.

15. The communication method according to claim 14, wherein the second request information comprises the first identification information, or the second request information comprises the first identification information and status information of the network digital twin instance; or
the second request information comprises the first identification information, and, requirement information for a first service in the network digital twin service, or the second request information comprises the first identification information for the network digital twin service, the requirement information for the first service, and status information of the network digital twin instance; and the requirement information for the first service is unavailable for a service other than the first service.

16. The communication method according to either of claims 14 and 15, wherein the method further comprises:
receiving second identification information indicating the network digital twin instance.

17. The communication method according to claim 15 or 16, wherein the method further comprises:
receiving modified status information of the network digital twin instance.

18. The communication method according to any one of claims 11 to 17, wherein the first request information comprises a service parameter for requesting the network digital twin service, and at least one of: the second identification information indicating the network digital twin instance or the first identification information.

19. The communication method according to any one of claims 11 to 18, wherein the network digital twin service comprises a pre-verification service, a visualization service, or a pre-evaluation service; an execution result of the pre-verification service is a network indicator value obtained after a to-be-verified policy is executed in the network digital twin instance, an execution result of the visualization service is visualization data of a visualization object, and an execution result of the pre-evaluation service is a predicted value of an evaluation indicator of the pre-evaluation service.

20. A communication apparatus, wherein the apparatus comprises a module configured to perform the method according to any one of claims 1 to 19.

21. A communication apparatus, wherein the communication apparatus comprises a processor and a transceiver, and the processor and the transceiver are configured to support the communication apparatus in performing the method according to any one of claims 1 to 19.

22. A computer-readable storage medium, wherein the computer-readable storage medium stores computer instructions; and when the computer instructions are run, the method according to any one of claims 1 to 19 is performed.

23. A chip, wherein the chip comprises a controller and an interface circuit, and the controller is configured to interact with another apparatus via the interface circuit, to perform the method according to any one of claims 1 to 19.

24. A communication system, wherein the communication system comprises a first apparatus and a second apparatus, the first apparatus is configured to perform the method according to any one of claims 11 to 19, and the second apparatus is configured to perform the method according to any one of claims 1 to 10.

25. A communication method, comprising: performing, by a first apparatus, the method according to any one of claims 11 to 19; and performing, by a second apparatus, the method according to any one of claims 1 to 10.
